# EUROPEAN PATENT APPLICATION

(11) **EP 4 431 207 A1**
(43) Date of publication of application: **18.09.2024**
(21) Application number: 22892786.9
(22) Date of filing: 08.11.2022
(51) Int. Cl.: B22F 10/80, B29C 64/10, B29C 64/386, B33Y 10/00, B33Y 50/00

(54) **THREE-DIMENSIONAL DATA GENERATION METHOD FOR SCREWS FOR THREE-DIMENSIONAL LAMINATE SHAPING**

(30) Priority: 11.11.2021 JP 2021183770
(71) Applicant: Kyowa Precise Manufacturing Co., Ltd., Hitachi-city, Ibaraki 316-0022 (JP)
(72) Inventor: IMANO, Shinya, Tokyo 100-8332 (JP)
(74) Representative: Henkel & Partner mbB
(86) International application number: PCT/JP2022/041616
(87) International publication number: WO 2023/085288

(57) **Abstract**

A three-dimensional data generation method of a threaded fastener for three-dimensional additive manufacturing includes: a step (S102) of generating first threaded portion data (310) by enlarging three-dimensional data of a threaded portion (3) of a standard threaded fastener along the axial direction of the threaded portion by a factor of 1.0 to 2.5; a step (S103) of generating second threaded portion data (320) by duplicating the first threaded portion data; a step (S104) of generating third threaded portion data (330) by disposing the first threaded portion data and the second threaded portion data on the same axis in such a manner that one ridge (321) in the second threaded portion data is located between two ridges (311) adjacent to each other in the first threaded portion data; and a step (S105) of generating fourth threaded portion data (340) by extracting a portion with a desired length from a part in which the first threaded portion data and the second threaded portion data overlap in the third threaded portion data.

## Description

### Technical Field

The present invention relates to a three-dimensional data generation method of a threaded fastener for three-dimensional additive manufacturing.

### Background Art

In an additively manufactured object manufactured by a three-dimensional additive manufacturing apparatus, commonly called a 3D printer, an overhang part arising from large protrusion of part of the additively manufactured object to the outside with respect to the build direction is often made. To smoothly finish the surface of this overhang part without a support member, it is effective to set the angle formed by the build direction and this overhang part (hereinafter, referred to as overhang angle) to 50 degrees or smaller, more preferably 45 degrees or smaller.

For example, JP-2019-90066-A discloses a three-dimensional additively manufactured product including a main body portion and an external thread portion disposed to protrude monolithically with the surface of the main body portion. The external thread portion has a following flank that forms a first flank angle with respect to the plane perpendicular to the axis line of the external thread portion. Further, the first flank angle is equal to or larger than 45 degrees (equal to or smaller than 45 degrees, according to the definition of the above-described overhang angle).

### Prior Art Document

### Patent Document

Patent Document 1: JP-2019-90066-A

### Summary of the Invention

### Problem to be Solved by the Invention

The thread angle of a threaded fastener compliant with standards used in countries (hereinafter, referred to as standard threaded fastener) is 60 degrees or 55 degrees in many cases. When such a standard threaded fastener is additively manufactured along the axial direction (screw-in direction) of the screw thread , the overhang angle of the ridges exceeds 45 degrees and even 50 degrees. That is, it is not easy to smoothly additively manufacture the standard threaded fastener without a support member. Thus, as a threaded fastener of a three-dimensional additively manufactured product, one having an external thread portion with a special shape like that in JP-2019-90066-A has been developed. However, such an external thread portion with the special shape has an entirely different shape from the external thread portion of the standard threaded fastener. Therefore, for example, when the external thread portion with a different nominal diameter (major diameter of the external thread portion) is necessary, three-dimensional data of this external thread portion needs to be created anew and a lot of time and labor is required. Furthermore, the direction of engagement between the external thread and the internal thread becomes unambiguous, and trouble is often caused when the whole of a manufactured object is manufactured with priority given to manufacturing of the screw thread. Although mention has been made about the external thread portion thus far, the same applies also to the internal thread portion made in a nut or the like.

The present invention has been made in view of the above-described circumstances, and an object thereof is to provide a three-dimensional data generation method of a threaded fastener for three-dimensional additive manufacturing that can easily create three-dimensional data of a threaded portion having ridges that can be smoothly additively manufactured by a three-dimensional additive manufacturing apparatus without a support member.

### Means for Solving the Problem

The present application includes a plurality of means for solving the above-described problem. To cite one example thereof, a three-dimensional data generation method of a threaded fastener for three-dimensional additive manufacturing includes a first step of generating first threaded portion data by enlarging three-dimensional data of a threaded portion of a standard threaded fastener along the axial direction of the threaded portion by a factor of 1.0 to 2.5; a second step of generating second threaded portion data by duplicating the first threaded portion data; a third step of generating third threaded portion data by disposing the first threaded portion data and the second threaded portion data on the same axis in such a manner that one ridge in the second threaded portion data is located between two ridges adjacent to each other in the first threaded portion data; and a fourth step of generating fourth threaded portion data by extracting a portion with a desired length from a part in which the first threaded portion data and the second threaded portion data overlap in the third threaded portion data.

### Advantages of the Invention

According to the present invention, it is possible to easily create three-dimensional data of a threaded fastener for three-dimensional additive manufacturing with a threaded portion having ridges that can be smoothly additively manufactured without a support member on the basis of three-dimensional data of a threaded portion of a standard threaded fastener, which is comparatively easy to obtain.

### Brief Description of the Drawings

FIG. 1 is a diagram illustrating generation steps of three-dimensional shape data of a threaded portion of a threaded fastener for three-dimensional additive manufacturing according to an embodiment of the present invention.
FIG. 2 is a side view of already-obtained three-dimensional data of a standard threaded fastener (hexagon bolt) 1.
FIG. 3 is a side view of three-dimensional data of a threaded portion 3 of the standard threaded fastener 1 of FIG. 2.
FIG. 4 is a side view of three-dimensional data of first threaded portion data 310.
FIG. 5 is a side view of three-dimensional data of third threaded portion data 330.
FIG. 6 is a side view of three-dimensional data of a hexagon bolt 10 using fourth threaded portion data 340 generated by the embodiment of the present invention.
FIG. 7 is a side view of three-dimensional data of a hexagon bolt 10A using fourth threaded portion data 340A generated when the shape of ridges is a trapezoid.
FIG. 8 is a sectional view of three-dimensional data of a nut 20 using fourth threaded portion data 440 of an internal thread portion.
FIG. 9 is a diagram illustrating one example of an external thread fabricated by the embodiment of the present invention.
FIG. 10 is a diagram illustrating one example of an internal thread fabricated by the embodiment of the present invention.
FIG. 11 is a diagram illustrating one example of a member fastened by the external thread and the internal thread fabricated by the embodiment of the present invention.
FIG. 12 is a side view of three-dimensional data of a threaded portion 4 of a metric forming standard threaded fastener.
FIG. 13 is a side view of three-dimensional data of first threaded portion data 312.
FIG. 14 is a side view of three-dimensional data of third threaded portion data 332.

### Modes for Carrying Out the Invention

Embodiments of the present invention will be described below with use of the drawings.

### [First Embodiment]

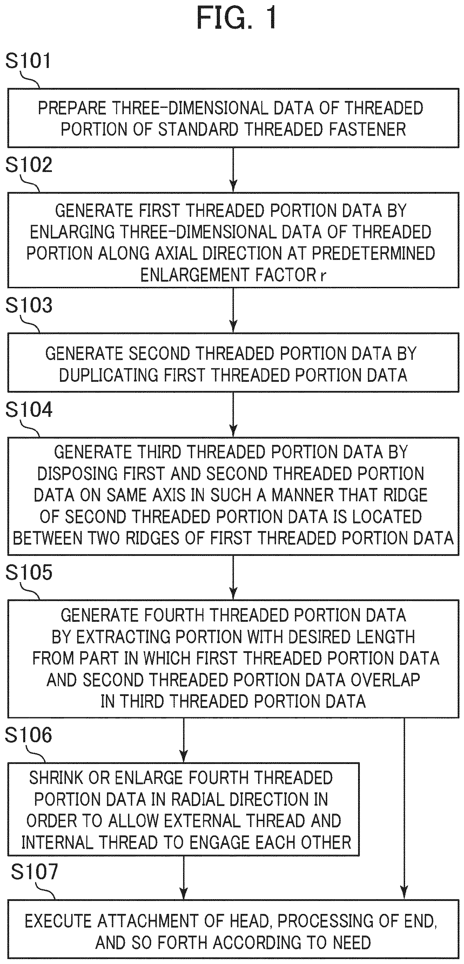

FIG. 1 is a diagram illustrating generation steps of three-dimensional shape data of a threaded portion of a threaded fastener for three-dimensional additive manufacturing according to an embodiment (first embodiment) of the present invention. Each step illustrated can be executed by operating three-dimensional CAD software installed on a computer, for example. Each step will be described in detail below.

First, in S101, three-dimensional data of a threaded portion of the standard threaded fastener is prepared.

As a method for preparing the three-dimensional data of the threaded portion, there is a method of using already-obtained three-dimensional data of the standard threaded fastener. The three-dimensional data of the standard threaded fastener can be downloaded from a website for free in many cases, for example, and is easy to obtain.

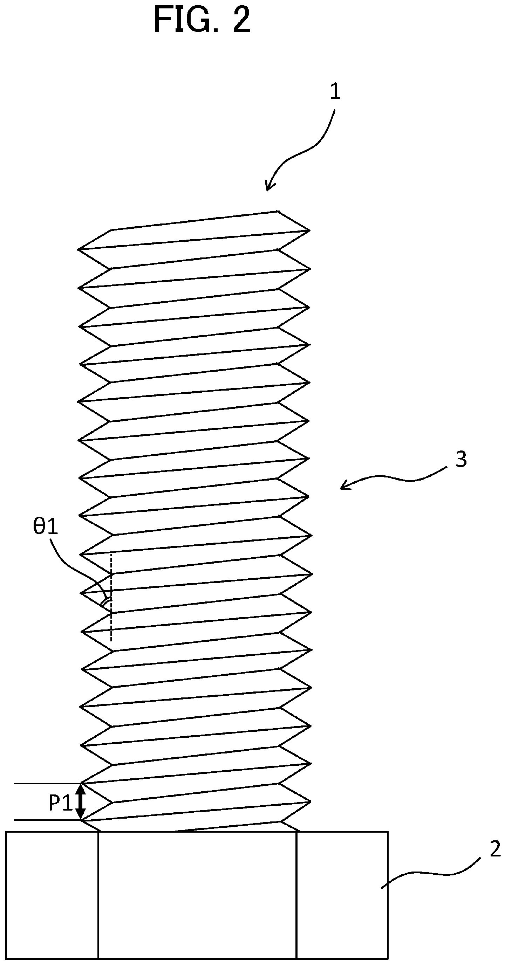

FIG. 2 is a side view of already-obtained three-dimensional data of a standard threaded fastener (hexagon bolt) 1. The standard threaded fastener 1 of FIG. 2 includes a head 2 with a substantially hexagonal column shape and a threaded portion (external thread portion) 3 having a base end attached to the head 2 and an external thread made in the outer circumference. Although the hexagon bolt 1 in which the head 2 has the hexagonal column shape is illustrated in FIG. 2, the shape of the head 2 is not particularly limited. Furthermore, the shape of ridges in the threaded portion 3 is also not particularly limited and may be a trapezoid, for example. Moreover, the shape of the threaded portion 3 may be a shape of a tapping screw or wood screw, which does not require a nut.

### (Step S101)

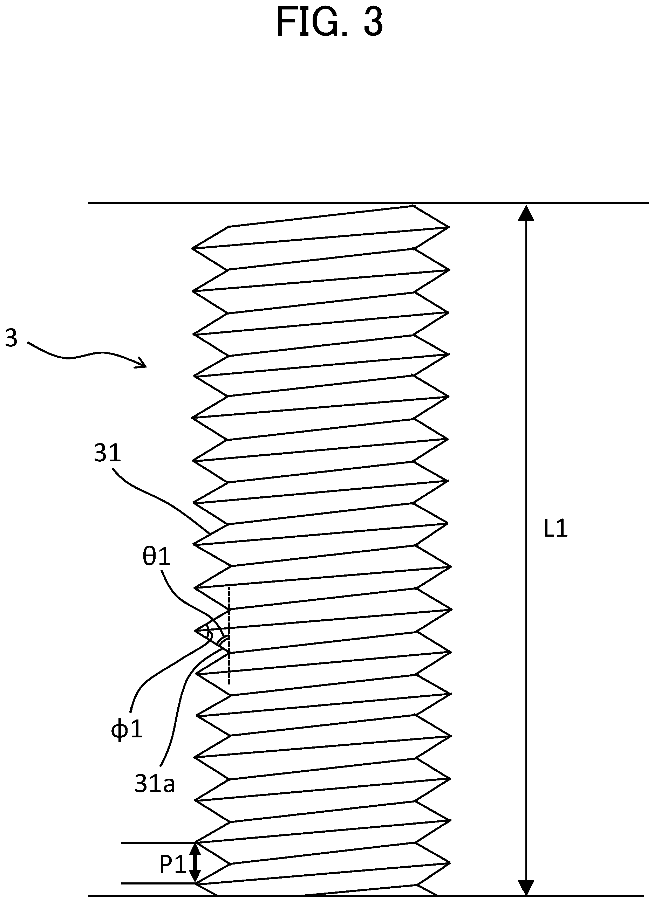

To prepare three-dimensional data of the threaded portion 3 in S101, for example, it suffices to remove the head 2 from the three-dimensional data of the standard threaded fastener 1 of FIG. 2. One that is obtained by removing the head 2 from the standard threaded fastener 1 to leave only the threaded portion 3 is illustrated in FIG. 3.

FIG. 3 is a side view of the three-dimensional data of the threaded portion 3 of the standard threaded fastener 1 of FIG. 2. The same part as a previous diagram is given the same numeral, and description thereof is omitted in some cases. This is the same also in subsequent diagrams.

The threaded portion 3 is a single-start thread in which a single-start helix of a ridge 31 exists in one pitch (defined as P1). The length of the threaded portion 3 is defined as L1.

The angle (thread angle) ϕ1 of each ridge 31 is 60 degrees. When the direction from the lower side toward the upper side in FIG. 3 is defined as the build direction of a three-dimensional additive manufacturing apparatus, each ridge 31 is an overhang part and an angle (overhang angle) Θ1 formed between a flank 31a on the lower side in each ridge 31 and the build direction is 60 degrees, which is the same as the thread angle ϕ1. That is, the overhang angle of the ridges 31 in this case is larger than 45 degrees. Thus, it is difficult to smoothly finish the lower flanks (following flanks) 31a by the three-dimensional additive manufacturing apparatus without a support.

Incidentally, the threaded portion of the standard threaded fastener may be created by three-dimensional CAD software. A command to create the threaded portion of the standard threaded fastener is often prepared in advance in commercially-available three-dimensional CAD software. In the case in which this kind of command exists in 3D CAD software, for example, three-dimensional data of the threaded portion of the standard threaded fastener can be easily created when a user selects the standard and the size (thickness (nominal diameter), length) of the threaded fastener.

### (Step S102)

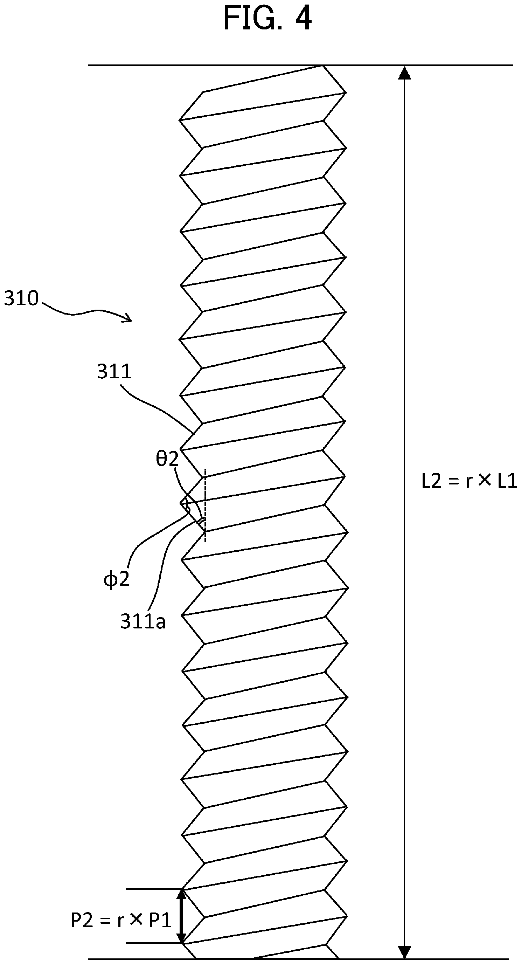

In S102, the three-dimensional data of the threaded portion 3 prepared in S101 is enlarged along the axial direction of the threaded portion 3 at a predetermined scaling factor (enlargement factor) r (r is a real number larger than one) while the dimension of the threaded portion 3 in the radial direction (nominal diameter) is kept. Here, three-dimensional data of the threaded portion after the enlargement is referred to as "first threaded portion data 310" and is illustrated in FIG. 4.

FIG. 4 is a side view of the three-dimensional data of the first threaded portion data 310. The first threaded portion data 310 is data obtained by multiplying the dimension of the threaded portion 3 of FIG. 3 by r along the axial direction while keeping the dimension in the radial direction. The first threaded portion data 310 has a plurality of ridges 311 regarding which the pitch is P2 (P2 = P1 × r) and the thread angle is (p2, and the overhang angle of a lower flank 311a of each ridge 311 is defined as Θ2. The length of the threaded portion 310 is L2 (L2 = L1 × r).

The enlargement factor r is decided in consideration of the overhang angle Θ2 of the lower flank 311a of the threaded portion 310 after the enlargement, and the interval of the ridges 311 obtained when the ridge 311 with the same dimension is disposed between two ridges 311 adjacent to each other in the threaded portion 310 after the enlargement (that is, pitch of third threaded portion data 330 generated in a step S104). For example, it is preferable to select an arbitrary value from a range of 1.5 to 2.5. The lower-limit value of the enlargement factor r is decided based on the overhang angle Θ2 of the lower flank 311a. Where Θ1 is 60 degrees, if Θ2 is represented by r, Θ2 = tan⁻¹(√3/r) is derived. Specifically, a value with which the overhang angle Θ2 becomes equal to or smaller than 50 degrees, preferably a value with which it becomes equal to or smaller than 45 degrees, is decided as the lower-limit value of the enlargement factor r. For example, it is when r is the square root of 3 (V3) that Θ2 becomes 45 degrees in the above-described expression. Furthermore, the upper-limit value of the enlargement factor r can be decided based on whether or not the pitch of the third threaded portion data 330 generated in the step S104 falls within a range allowable for the user. This is because the number of ridges decreases and the bond strength of the screw thread lowers when the pitch increases in the case in which the length of the screw thread to be generated is settled in advance. It is preferable to set the enlargement factor r to 2 in the range of 1.5 to 2.5. In the following, description will be made based on an assumption of r = 2. In the case of r = 2 and Θ1 = 60 degrees, Θ2 becomes approximately 41 degrees, which is equal to or smaller than 45 degrees.

### (Step S103)

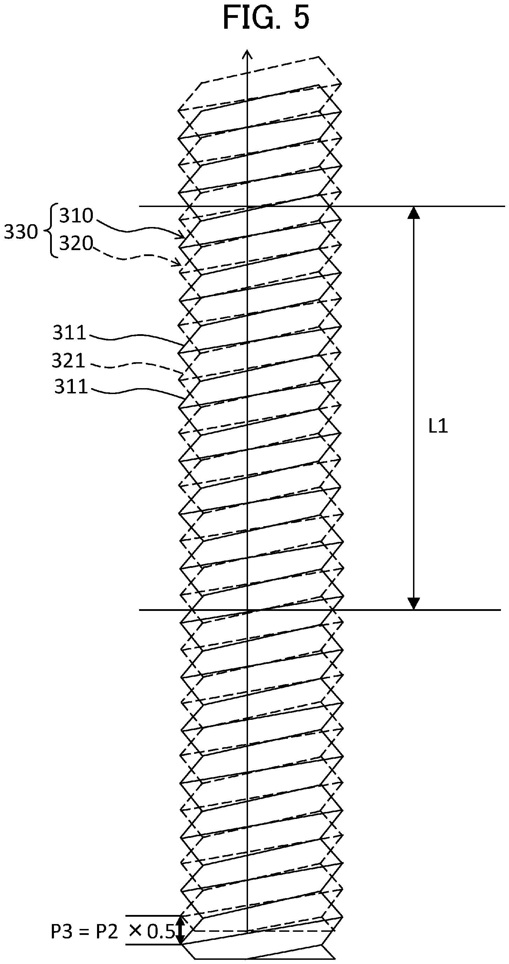

In S103, the first threaded portion data 310 generated in S102 is duplicated (copy & paste) and data arising from the duplication is treated as second threaded portion data 320 (see FIG. 5).

### (Step S104)

In S104, two threaded portion data 310 and 320 are disposed on the same axis in such a manner that one ridge 321 in the second threaded portion data 320 generated in S103 is located between two ridges 311 adjacent in the first threaded portion data 310, and these two threaded portion data 310 and 320 are united to generate the third threaded portion data 330. This third threaded portion data 330 is illustrated in FIG. 5.

FIG. 5 is a side view of the three-dimensional data of the third threaded portion data 330. In the diagram, the first threaded portion data 310 is illustrated by solid lines and the second threaded portion data 320 is illustrated by dashed lines. In the third threaded portion data 330, the ridge 321 of the second threaded portion data 320 is disposed to be located between two ridges 311 adjacent to each other in the first threaded portion data 310. Moreover, the first threaded portion data 310 and the second threaded portion data 320 are disposed on the same axis. Due to this, the part in which the first threaded portion data 310 and the second threaded portion data 320 overlap in the third threaded portion data 330 is a double-start thread in which a double-start thread helix exists in one pitch.

In the example of FIG. 5, the positions of the first threaded portion data 310 and the second threaded portion data 320 are shifted from each other in the axial direction by P2 × 0.5 such that a pitch P3 of the third threaded portion data 330 may become half the pitch P2 of the first threaded portion data 310 and the second threaded portion data 320. When the enlargement factor r is 2, the pitch P3 corresponds with the pitch P1 (FIGs. 2 and 3) of the threaded portion 3 employed as the original. However, the amount of shift of both threaded portion data 310 and 320 in the axial direction is not limited to P2 × 0.5. An arbitrary value (amount of shift) can be selected as long as the condition that the ridge 321 of the second threaded portion data 320 is located between two ridges 311 adjacent to each other in the first threaded portion data 310 is satisfied. Furthermore, two kinds of pitch appear in the third threaded portion data when a value other than P2 × 0.5 is selected.

### (Step S105)

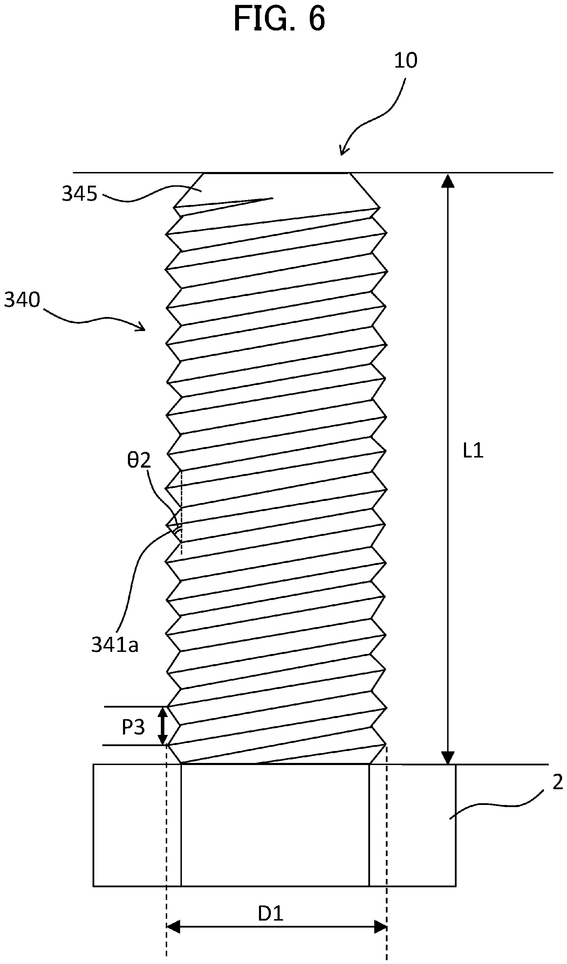

In S105, fourth threaded portion data 340 (see FIG. 6) is generated by extracting a portion equivalent to a desired length (for example, length L1 of the standard threaded fastener 1 illustrated in FIG. 5) from the part in which the first threaded portion data 310 and the second threaded portion data 320 overlap in the third threaded portion data 330. This ends the generation of the fourth threaded portion data 340.

### (Step S106)

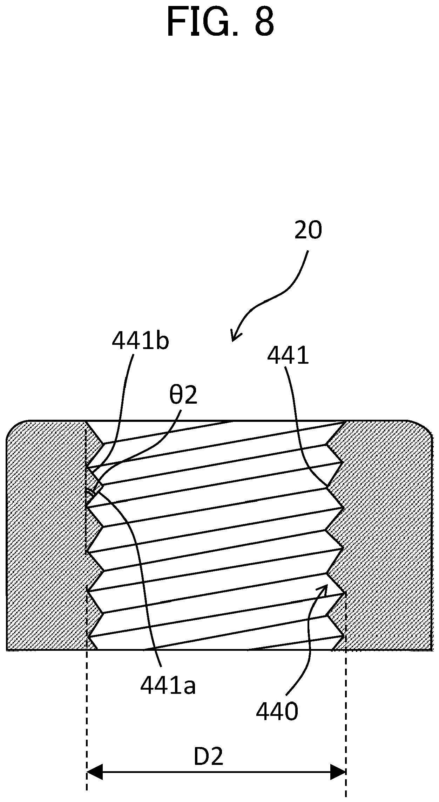

It is possible to design a desired external thread by the fourth threaded portion data 340 generated in S105. However, it is preferable to shrink or enlarge the fourth threaded portion data 340 in the radial direction in S106 (fifth step) in order to facilitate engagement with an internal thread that makes a pair. To make the external thread and the internal thread easily engage with each other, the major diameter of the external thread (D1 in FIG. 6) needs to be made slightly smaller than the major diameter of the internal thread (D2 in FIG. 8). However, regarding "shrinkage or enlargement" in this step, it suffices to execute either one of shrinkage of the external thread and enlargement of the internal thread. In the case of shrinking the external thread, it is desirable to shrink the fourth threaded portion data 340 in the radial direction by a factor of 0.85 to 0.90, for example. In the case of enlarging the internal thread, it is desirable to enlarge fourth threaded portion data 440 (FIG. 8) in the radial direction by a factor of 1.1 to 1.2, for example. However, when the internal thread is enlarged, a flank 441a of the screw thread becomes shallower, and therefore the angle Θ2 (overhang angle: FIG. 8) formed by the flank 441a and the axis line of the screw thread becomes larger. Thus, shrinking the external thread is more desirable than enlarging the internal thread. In one example of the embodiment of the present embodiment, the external thread (fourth threaded portion data 340) is shrunk in the radial direction by a factor of 0.88 so as to be allowed to engage with the internal thread (fourth threaded portion data 440 (FIG. 8)). S106 can be omitted, which is apparent also from the fact that an arrow that directly reaches S107 from S105 without passing through S106 is illustrated in FIG. 1.

### (Step S107)

Moreover, in S107, three-dimensional data of a desired additively manufactured object having the fourth threaded portion data 340 generated in S105 as a threaded portion may be generated. In this step, desired processing may be added to an end or a base end of the fourth threaded portion data 340. Furthermore, desired processing may be added to an end or a base end also regarding data obtained by shrinking or enlarging the fourth threaded portion data 340 in the radial direction in S106. The case in which a hexagon bolt is generated as an additively manufactured object having the fourth threaded portion data 340 as a threaded portion is illustrated in FIG. 6.

FIG. 6 is a side view of three-dimensional data of a hexagon bolt 10 using the fourth threaded portion data 340 generated by the embodiment of the present invention. The bolt 10 includes the fourth threaded portion data (threaded portion) 340 having an end in which a chamfer 345 is made and the head 2 attached to the base end side of the fourth threaded portion data 340. The example of FIG. 6 is merely one example and the shapes of the chamfer 345 and the head 2 can be changed to optional shapes. Furthermore, the chamfer 345 and the head 2 are not indispensable elements.

The pitch of the fourth threaded portion data 340 is P3, which is the same as the third threaded portion data 330. The length of the fourth threaded portion data 340 is L1, which is the same as the threaded portion 3 of the standard threaded fastener of FIGs. 2 and 3.

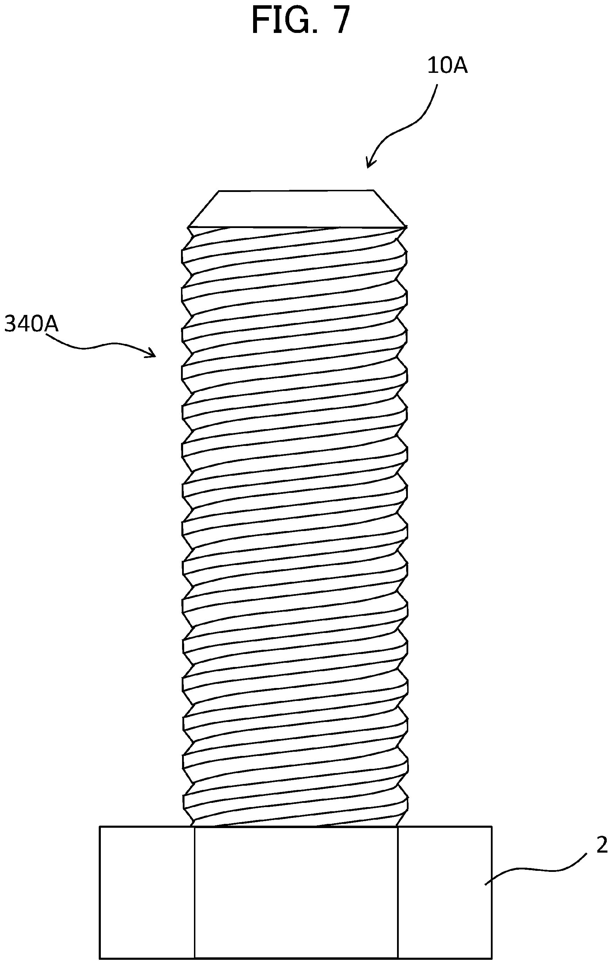

As already described, the shape of the ridges of the threaded portion 3 prepared in S101 is not limited to the triangle described in the above and may be a trapezoid, for example. A hexagon bolt 10A using fourth threaded portion data 340A generated when the shape of ridges is a trapezoid is illustrated in FIG. 7.

### (Effects)

As described above, in the present embodiment, in generation of three-dimensional data of a threaded fastener for three-dimensional additive manufacturing, the generation steps include: the first step (S102) of generating the first threaded portion data 310 by enlarging three-dimensional data of the threaded portion 3 of the standard threaded fastener along the axial direction of the threaded portion 3 by a factor of 1.5 to 2.5; the second step (S103) of generating the second threaded portion data 320 by duplicating the first threaded portion data 310; the third step (S104) of generating the third threaded portion data 330 by disposing the first threaded portion data 310 and the second threaded portion data 320 on the same axis in such a manner that one ridge 321 in the second threaded portion data 320 is located between two ridges 311 adjacent to each other in the first threaded portion data 310; and the fourth step (S105) of generating the fourth threaded portion data 340 by extracting a portion with a desired length from a part in which the first threaded portion data 310 and the second threaded portion data 320 overlap in the third threaded portion data 330.

The angle Θ2 formed by a lower flank 341a of the ridge of the fourth threaded portion data 340 generated in this manner and the axis line of the fourth threaded portion data 340 is equal to or smaller than 50 degrees. Therefore, the lower flanks 341a can be smoothly manufactured without a support member in the case of additively manufacturing a part including the shape defined by the fourth threaded portion data 340 (for example, hexagon bolt 10 in FIG. 6) by a three-dimensional additive manufacturing apparatus from the lower side in the axial direction of the fourth threaded portion data 340 toward the upper side. In particular, the three-dimensional data necessary in the generation of the three-dimensional data of the fourth threaded portion data 340 is only the three-dimensional data of the threaded portion 3 of the standard threaded fastener, which is easy to obtain. Consequently, the fourth threaded portion data 340 can be generated by only applying simple operation (enlargement, copy, paste, movement, etc.) to the three-dimensional data of the threaded portion 3 on 3D CAD software. That is, according to the present embodiment, it is possible to easily create three-dimensional data of a threaded portion having ridges that can be smoothly additively manufactured by a three-dimensional additive manufacturing apparatus without a support member. Furthermore, the manufacturing cost of the threaded fastener by the additive manufacturing can be reduced, and variation in the quality of the additively manufactured threaded fastener is also suppressed and thus the yield can be improved.

Moreover, in the ridges of the fourth threaded portion data 340 generated by the above-described method, the angle formed by each of the lower flank (following flank) 341a and the upper flank (leading flank) with the axis line of the fourth threaded portion data 340 is the same Θ2. Therefore, the above-described method has a merit of layer-stacking being enabled to be executed from either direction of the axial direction. In contrast, in the external thread portion of Patent Document 1 (JP-2019-90066-A), the overhang angle of the following flank located on the rear side with respect to the screw-in direction (advancing direction) of the screw thread is equal to or smaller than 45 degrees, whereas the overhang angle of the leading flank located on the front side with respect to the screw-in direction is set to 90 degrees, for example. Therefore, to manufacture this external thread portion without a support member, layer stacking (manufacturing) needs to be executed with a posture in which the leading flank is located on the upper side and the following flank is located on the lower side (that is, posture in which the screw-in direction of the screw thread is the vertically upward direction). That is, the build direction of this external thread portion is substantially limited to one direction.

As explained in the above-described embodiment, when the first threaded portion data 310 and the second threaded portion data 320 are disposed in such a manner as to be shifted from each other by 0.5 times the pitch P2 of the first threaded portion data 310 in the axial direction in S104 while the enlargement factor r in S102 is set to 2, the angle Θ2 formed by two flanks related to the ridge of the third threaded portion data 330 and the fourth threaded portion data 340 and the axis line of the screw thread becomes a value smaller than 45 degrees, and the pitches P3 of the third threaded portion data 330 and the fourth threaded portion data 340 both correspond with the pitch P1 of the original threaded portion 3. That is, the three-dimensional data of the screw threads 330 and 340 having the same pitch and length as the original threaded portion 3, and having Θ2 smaller than 45 degrees can be easily generated. Furthermore, according to this method, three-dimensional data of the screw thread can be generated with use of the standard threaded fastener through the settled steps, and thus standardization of the screw thread is also easy. The screw thread additively manufactured by using the fourth threaded portion data 340 is a double-start thread, and therefore the lead (distance across which the screw thread advances in one revolution) is twice that of the original threaded portion 3.

As mentioned also above, it is preferable to select the enlargement factor r of S102 in such a manner that the angle Θ2 formed by the axis line of the first threaded portion data 310 (threaded portion) and two flanks (lower flank and upper flank) related to one ridge 311 in the first threaded portion data 310 becomes equal to or smaller than 50 degrees, such that ridges (flanks) defined in the fourth threaded portion data 340 can be smoothly additively manufactured by a three-dimensional additive manufacturing apparatus. Moreover, it is preferable to select the enlargement factor r in such a manner that the angle Θ2 becomes equal to or smaller than 45 degrees.

### [Second Embodiment]

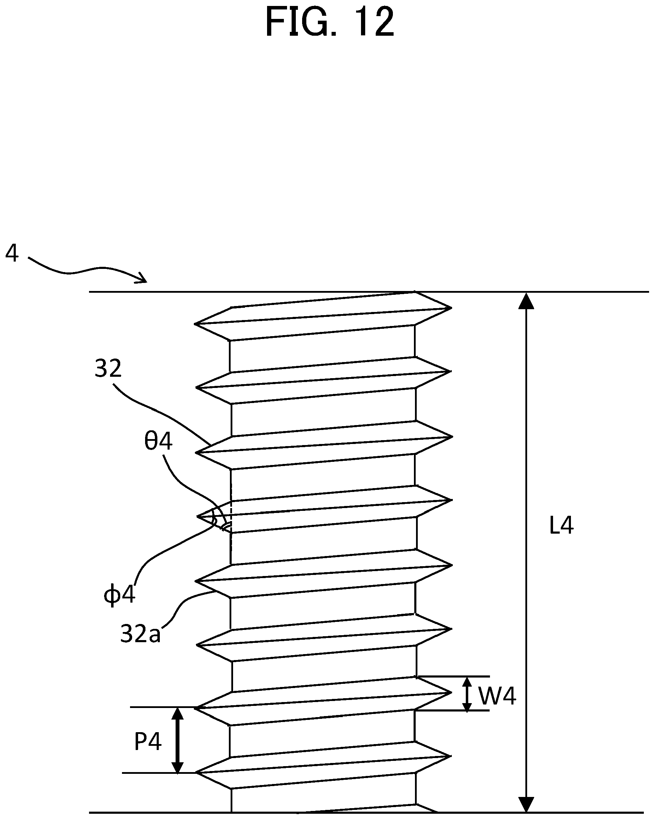

In the present embodiment, steps for generating three-dimensional shape data of a threaded portion of a threaded fastener for three-dimensional additive manufacturing with use of a metric forming thread with a wide pitch interval as a standard threaded fastener will be illustrated. The generation steps of the three-dimensional shape data of the present embodiment are substantially the same as those of the first embodiment, and therefore will be described in line with FIG. 1. However, different drawings (FIGs. 12 to 14) from the first embodiment are used for the description of the respective steps because the shape of the screw thread is different. A different drawing from the first embodiment is not used for the description of the step S106 and the step S107, and therefore the description of these steps is omitted and the steps S101 to S105 will be described here.

### (Step S101)

To prepare three-dimensional data of a threaded portion 4 in S101, the head 2 is removed from three-dimensional data of a metric forming thread compliant with standards to leave only the threaded portion 4, such that the head 2 is removed from three-dimensional data of the standard threaded fastener 1 in FIG. 2, for example. The threaded portion 4 is illustrated in FIG. 12.

FIG. 12 is a side view of the three-dimensional data of the threaded portion 4 obtained by using a metric forming thread as a standard threaded fastener and removing the head from three-dimensional data of the standard threaded fastener. The threaded portion 4 may be created by three-dimensional CAD software. In the case in which a command to create the threaded portion 4 of a metric forming thread is prepared in advance in commercially-available three-dimensional CAD software, the three-dimensional data of the threaded portion 4 of a metric forming thread of the standard can be easily created when a user selects the standard and the size (thickness (nominal diameter), length) of the screw thread, for example.

The threaded portion 4 is a single-start thread in which a single-start helix of one ridge 32 exists in one pitch (defined as P4). In the threaded portion 4 of FIG. 12, the pitch interval is wide and the number of ridges is small compared with the threaded portion 3 of FIG. 3 (first embodiment). In FIG. 12, L4 denotes the length of the threaded portion 4. W4 denotes the width of the ridge. ϕ4 denotes the thread angle of the ridge 32. Θ4 denotes the overhang angle. The overhang angle is the angle formed by a lower flank 32a of each ridge 32 and the build direction (in FIG. 12, direction from the lower side toward the upper side). As the metric forming thread in the present embodiment, a screw thread in which the pitch interval P4 is equal to or wider than twice the width W4 of the ridge is targeted.

### (Step S102)

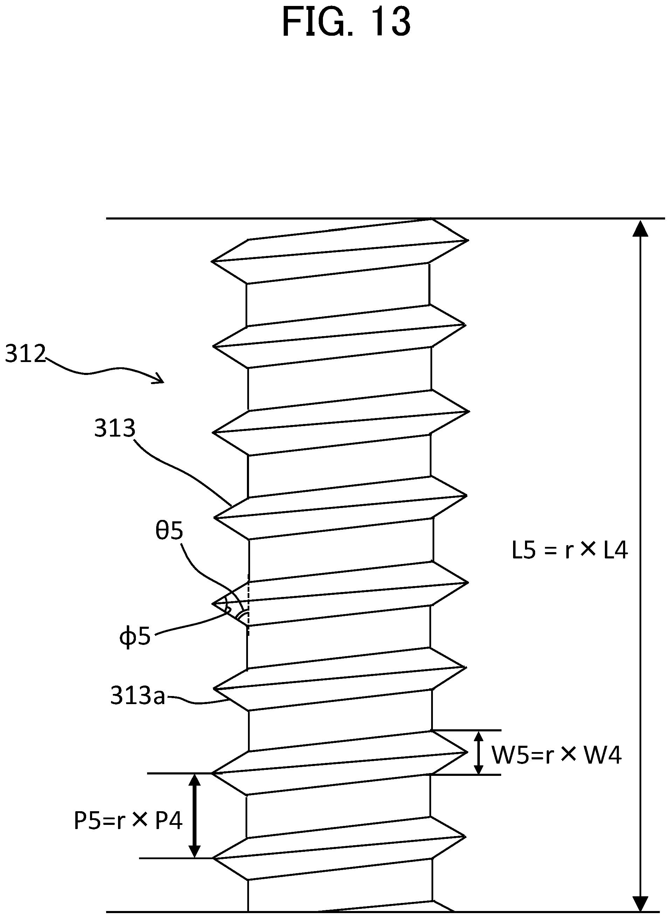

In S102, the three-dimensional data of the threaded portion 4 prepared in S101 is enlarged along the axial direction of the threaded portion 4 at a predetermined scaling factor (enlargement factor) r (r is a real number equal to or larger than one) while the dimension of the threaded portion 4 in the radial direction (nominal diameter) is kept. Here, three-dimensional data of the threaded portion after the enlargement is referred to as "first threaded portion data 312" and is illustrated in FIG. 13.

FIG. 13 is a side view of the three-dimensional data of the first threaded portion data 312. The first threaded portion data 312 is data obtained by multiplying the dimension of the threaded portion 4 of FIG. 12 by r along the axial direction while keeping the dimension in the radial direction. The first threaded portion data 312 has a plurality of ridges 313 regarding which the pitch is P5 (P5 = P4 × r) and the thread angle is ϕ5. The overhang angle of a lower flank 313a of each ridge 313 is defined as Θ5. The length of the threaded portion 312 is L5 (L5 = L4 × r). The width of the ridge is W5 (W4 × r).

The enlargement factor r is decided in consideration of the overhang angle Θ5 of the lower flank 313a of the threaded portion 312 after the enlargement and the interval of the ridges 313 when the ridge 313 with the same dimension is disposed between two ridges 313 adjacent to each other in the threaded portion 312 after the enlargement (that is, pitch of third threaded portion data 332 generated in the step S104). For example, the enlargement factor is preferable to select an arbitrary value from a range of 1.0 to 2.5 differently from the first embodiment. The lower-limit value of the enlargement factor r is decided based on the overhang angle Θ5 of the lower flank 313a. When Θ5, where Θ4 is 55 degrees, is represented by r, Θ5 = tan⁻¹(tan(55)/r) is derived. Specifically, a value with which the overhang angle Θ5 becomes equal to or smaller than 50 degrees, preferably a value with which it becomes equal to or smaller than 45 degrees, is decided as the lower-limit value of the enlargement factor r. For example, it is when r is tan(55) = 1.4 that Θ5 becomes 45 degrees in the above-described expression. Furthermore, the upper-limit value of the enlargement factor r can be decided based on whether or not the pitch of the third threaded portion data 332 generated in the step S104 falls within a range allowable for the user. This is because the number of ridges decreases and the bond strength of the screw thread lowers when the pitch increases in the case where the length of the screw thread to be generated is settled in advance. When the overhang angle Θ4 of the threaded portion 4 of the metric forming thread is equal to or smaller than 45 degrees, it is also possible to set the enlargement factor r to 1. At this time, the step S102 is omitted, and therefore the three-dimensional data of the threaded portion 4 becomes the first threaded portion data 312 (in other words, the three-dimensional data of the threaded portion 4 is enlarged along the axial direction by a factor of 1.0 to generate the first threaded portion data 312 in the step S102). In the following, description will be made based on an assumption of r = 1.5. In the case of r = 1.5 and Θ4 = 55 degrees, Θ5 becomes approximately 44 degrees, which is equal to or smaller than 45 degrees.

### (Step S103)

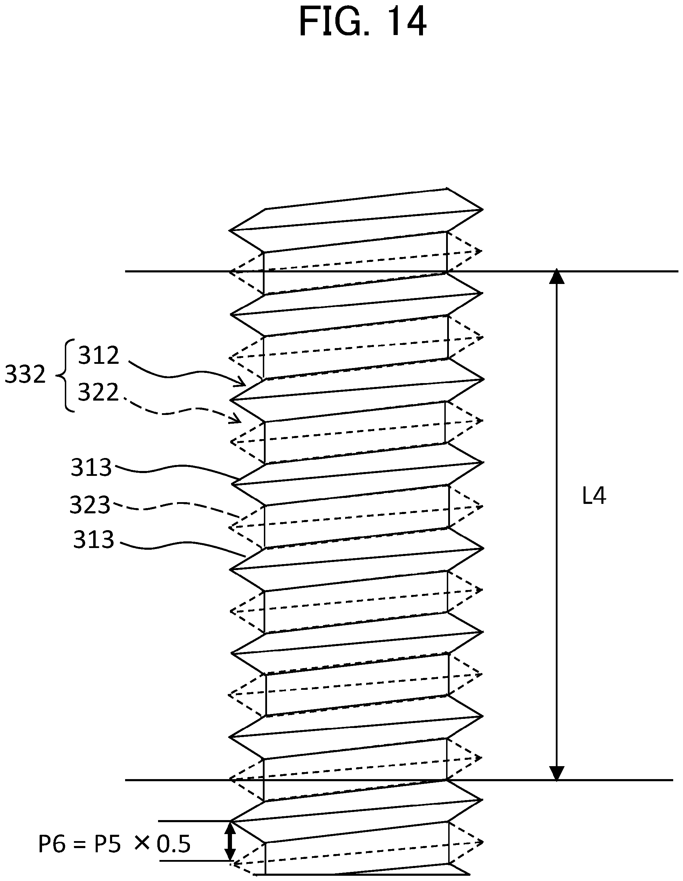

In S103, the first threaded portion data 312 generated in S102 is duplicated (copy & paste) and data arising from the duplication is treated as second threaded portion data 322 (see FIG. 14).

### (Step S104)

In S104, two threaded portion data 312 and 322 are disposed on the same axis in such a manner that one ridge 323 in the second threaded portion data 322 generated in S103 is located between two ridges 313 adjacent to each other in the first threaded portion data 312, and these two threaded portion data 312 and 322 are united to generate the third threaded portion data 332. This third threaded portion data 332 is illustrated in FIG. 14.

FIG. 14 is a side view of the three-dimensional data of the third threaded portion data 332. In the diagram, the first threaded portion data 312 is illustrated by solid lines and the second threaded portion data 322 is illustrated by dashed lines. In the third threaded portion data 332, the ridge 323 of the second threaded portion data 322 is disposed to be located between two ridges 313 adjacent to each other in the first threaded portion data 312. Moreover, the first threaded portion data 312 and the second threaded portion data 322 are disposed on the same axis. Due to this, the part in which the first threaded portion data 312 and the second threaded portion data 322 overlap in the third threaded portion data 332 is a double-start thread in which a double-start thread helix exists in one pitch.

In the example of FIG. 14, the positions of the first threaded portion data 312 and the second threaded portion data 322 are shifted from each other in the axial direction by P5 × 0.5 such that a pitch P6 of the third threaded portion data 332 may become half the pitch P5 of the first threaded portion data 312 and the second threaded portion data 322. When the enlargement factor r is 1.5, the pitch P6 becomes half the value obtained by multiplying the pitch P4 (FIG. 12) of the threaded portion 4 employed as the original by 1.5. However, for the shift of both threaded portion data 312 and 322 in the axial direction, an arbitrary value (amount of shift) can be selected as long as the condition that the ridge 323 of the second threaded portion data 322 is located between two ridges 313 adjacent to each other in the first threaded portion data 312 is satisfied. In this case, two kinds of pitch appear in the third threaded portion data.

### (Step S105)

In S105, fourth threaded portion data (not illustrated) is generated by extracting a portion equivalent to a desired length (for example, length L4 illustrated in FIG. 14) from the part in which the first threaded portion data 312 and the second threaded portion data 322 overlap in the third threaded portion data 332. This ends the generation of the fourth threaded portion data.

### (Effects)

As explained in the above-described second embodiment, when the first threaded portion data 312 and the second threaded portion data 322 are disposed in such a manner as to be shifted from each other by 0.5 times the pitch P5 of the first threaded portion data 312 in the axial direction in S104 while the enlargement factor r in S102 is set to 1.5, the angle Θ5 formed by two flanks related to the ridge of the third threaded portion data 332 and the axis line of the screw thread becomes a value smaller than 45 degrees, and the pitch P6 of the third threaded portion data 332 becomes half the value obtained by multiplying the pitch P4 of the original threaded portion 4 by 1.5. That is, it is possible to easily generate the three-dimensional data of the screw thread in which the length is the same as the original threaded portion 4, the pitch is 0.75 times that of the threaded portion 4, and the overhang angle is smaller than 45 degrees. Furthermore, according to this method, three-dimensional data of the screw thread can be generated with use of the standard threaded fastener through the settled steps, and thus standardization of the screw thread is also easy. Moreover, when a metric forming thread is used as the standard threaded fastener, the enlargement factor in S102 can be made low because the pitch interval P4 is equal to or wider than twice the width W4 of the ridge. When the enlargement factor becomes low, increase in the thread angle ϕ5 after the enlargement with respect to the thread angle ϕ4 before the enlargement can be made small. Thus, the thread angle can be kept shallow, and decrease in the bond strength of the screw thread can be suppressed. The shape of the ridges of the metric forming thread is not limited to the triangle described in the above and may be a trapezoid like that illustrated in FIG. 7, for example. Also when the shape of the ridge of the metric forming thread is a trapezoid, the enlargement factor in S102 can be made low. Thus, the thread angle (base angle of the trapezoid) can be kept shallow, and decrease in the bond strength of the screw thread can be suppressed.

### [Others]

Although the fourth threaded portion data 340 of the above-described respective embodiments is data of the external thread portion, the fourth threaded portion data of an internal thread portion can also be similarly generated by the steps of FIG. 1. FIG. 8 is a sectional view of three-dimensional data of a nut 20 using the fourth threaded portion data 440 of an internal thread portion. However, when S106 in FIG. 1 (enlargement in the radial direction) is executed for the fourth threaded portion data 440 of the internal thread portion, the fourth threaded portion data 340 of the external thread may keep the size obtained at the end of S105 (the fourth threaded portion data 340 of the external thread is not shrunk with omission of S106). Conversely, when S106 in FIG. 1 (shrinkage in the radial direction) is executed for the fourth threaded portion data 340 of the external thread portion, the fourth threaded portion data 440 of the internal thread may keep the size obtained at the end of S105 (the fourth threaded portion data 440 of the internal thread is not enlarged with omission of S106).

In particular, in the three-dimensional data of the nut 20, the angle formed by each of two flanks 441a and 441b forming each ridge 441 in the fourth threaded portion data 440 and the axis line of the fourth threaded portion data 440 is the same Θ2. Thus, there is a merit that, from whichever direction of the axial direction the additive manufacturing is executed, all flanks can be smoothly finished. Furthermore, there is also a merit that a bolt can be inserted into the nut 20 from either direction of the axial direction.

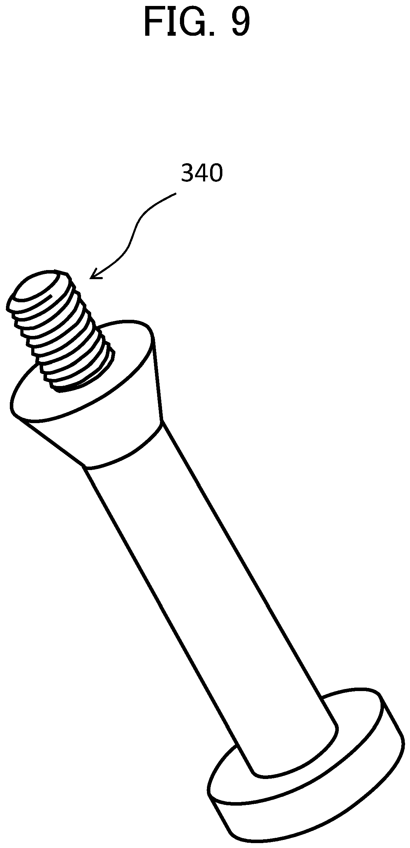

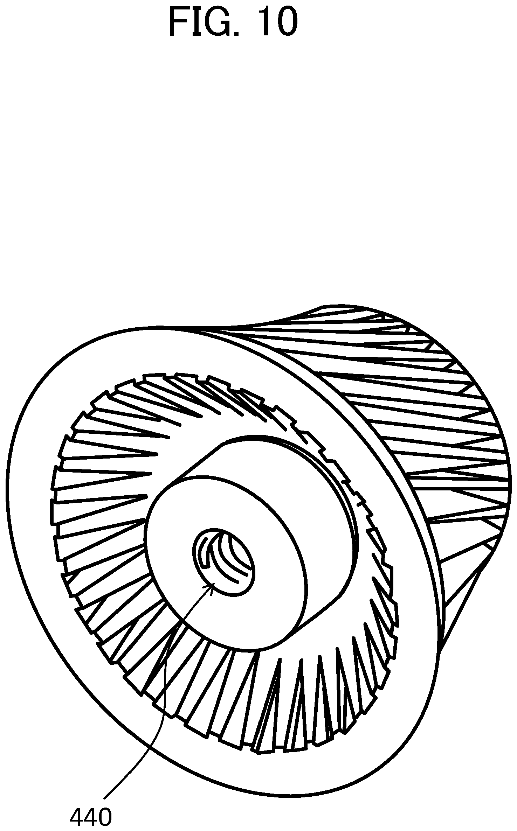

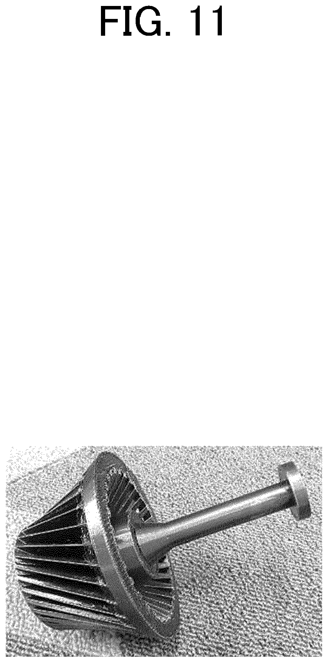

In the above, a bolt and a nut are cited as examples of the additively manufactured object using the fourth threaded portion data. However, the method described in the above can be applied to three-dimensional data of various additively manufactured objects (for example, joint member used for piping or the like) as long as the object has a threaded portion (external thread portion or internal thread portion). Moreover, the method can be applied also to a manufacturing method of the additively manufactured object by a three-dimensional additive manufacturing apparatus using the three-dimensional data. For example, the method can be applied also to an external thread with a shape like one in FIG. 9 and an internal thread with a shape like one in FIG. 10. In both the external thread of FIG. 9 and the internal thread of FIG. 10, the threaded portion has the fourth threaded portion data 340 or 440 generated by using the present invention. Furthermore, it is also possible to use the external thread of FIG. 9 and the internal thread of FIG. 10 as a fastened member illustrated in FIG. 11 by fastening them. As above, the three-dimensional data of the threaded portion to which the present invention is applied can be applied also to an external thread and an internal thread having a complicated shape.

Moreover, in the above, description has been made about the case in which two threaded portion data 310 and 320 obtained by enlarging the threaded portion 3 of the standard threaded fastener are synthesized to generate a double-start thread as the fourth threaded portion data 340. However, three threaded portion data obtained by enlarging the threaded portion 3 of the standard threaded fastener may be synthesized to generate a triple-start thread.

The present invention is not limited to the above-described respective embodiments and various modification examples in such a range as not to depart from the gist of the present invention are included therein. For example, the present invention is not limited to that including all configurations described in the above embodiment and also includes that obtained by deleting part of the configurations. Moreover, it is possible to add or substitute part of a configuration according to a certain embodiment to or for a configuration according to another embodiment. For example, the respective inventions of the following (1) to (9) can be included in the present invention.
(1) A three-dimensional data generation method of a threaded fastener for three-dimensional additive manufacturing includes: a first step of generating first threaded portion data by enlarging three-dimensional data of a threaded portion of a standard threaded fastener along an axial direction of the threaded portion by a factor of 1.0 to 2.5; a second step of generating second threaded portion data by duplicating the first threaded portion data; a third step of generating third threaded portion data by disposing the first threaded portion data and the second threaded portion data on a same axis in such a manner that one ridge in the second threaded portion data is located between two ridges adjacent to each other in the first threaded portion data; and a fourth step of generating fourth threaded portion data by extracting a portion with a desired length from a part in which the first threaded portion data and the second threaded portion data overlap in the third threaded portion data.
(2) The three-dimensional data generation method of a threaded fastener for three-dimensional additive manufacturing according to above-described (1), in which the three-dimensional data generation method includes a fifth step of shrinking or enlarging the fourth threaded portion data in a radial direction.
(3) The three-dimensional data generation method of a threaded fastener for three-dimensional additive manufacturing according to above-described (1) or (2), in which, in the first step, the first threaded portion data is generated by enlarging the three-dimensional data of the threaded portion of the standard threaded fastener along the axial direction of the threaded portion of the standard threaded fastener by a factor of 2, and in the third step, the third threaded portion data is generated by disposing the first threaded portion data and the second threaded portion data in such a manner that the first threaded portion data and the second threaded portion data are shifted from each other in the axial direction by 0.5 times a pitch of the first threaded portion data.
(4) The three-dimensional data generation method of a threaded fastener for three-dimensional additive manufacturing according to any one of above-described (1) to (3), in which angles formed by an axis line of a threaded portion and two flanks related to one ridge in the first threaded portion data are each equal to or smaller than 50 degrees.
(5) The three-dimensional data generation method of a threaded fastener for three-dimensional additive manufacturing according to any one of above-described (1) to (3), in which angles formed by an axis line of a threaded portion and two flanks related to one ridge in the first threaded portion data are each equal to or smaller than 45 degrees.
(6) The three-dimensional data generation method of a threaded fastener for three-dimensional additive manufacturing according to above-described (1), in which the standard threaded fastener has a screw thread in which the pitch interval is equal to or wider than twice a width of the ridge.
(7) The three-dimensional data generation method of a threaded fastener for three-dimensional additive manufacturing according to any one of above-described (2) to (5), in which the standard threaded fastener has a screw thread in which the pitch interval is equal to or wider than twice a width of the ridge.
(8) The three-dimensional data generation method of a threaded fastener for three-dimensional additive manufacturing according to above-described (6) or (7), in which the three-dimensional data of the threaded portion is enlarged along the axial direction of the threaded portion by a factor of 1.0 in the first step when angles formed by an axis line of the threaded portion of the standard threaded fastener and two flanks related to one ridge are equal to or smaller than 45 degrees.
(9) A manufacturing method of an additively manufactured object according to any one of above-described (1) to (8), in which an additively manufactured object is manufactured by a three-dimensional additive manufacturing apparatus on the basis of the fourth threaded portion data according to claim 1.

### Description of Reference Characters

1: Standard threaded fastener (hexagon bolt)
3: Threaded portion of the standard threaded fastener (external thread portion)
4: Threaded portion of a metric forming thread of a standard (external thread portion)
10: Hexagon bolt
20: Nut
31: Ridge
31a: Lower flank (following flank)
32: Ridge
32a: Lower flank
310: First threaded portion data
311: Ridge
311a: Lower flank
312: First threaded portion data
313: Ridge
320: Second threaded portion data
321: Ridge
322: Second threaded portion data
323: Ridge
330: Third threaded portion data
332: Third threaded portion data
340: Fourth threaded portion data
340A: Fourth threaded portion data
345: Chamfer
341a: Lower flank (following flank)
440: Fourth threaded portion data
441: Ridge
441a: Flank
441b: Flank

## Claims

1. A three-dimensional data generation method of a threaded fastener for three-dimensional additive manufacturing, the three-dimensional data generation method comprising:
a first step of generating first threaded portion data by enlarging three-dimensional data of a threaded portion of a standard threaded fastener along an axial direction of the threaded portion by a factor of 1.0 to 2.5;
a second step of generating second threaded portion data by duplicating the first threaded portion data;
a third step of generating third threaded portion data by disposing the first threaded portion data and the second threaded portion data on a same axis in such a manner that one ridge in the second threaded portion data is located between two ridges adjacent to each other in the first threaded portion data; and
a fourth step of generating fourth threaded portion data by extracting a portion with a desired length from a part in which the first threaded portion data and the second threaded portion data overlap in the third threaded portion data.

2. The three-dimensional data generation method of a threaded fastener for three-dimensional additive manufacturing according to claim 1, wherein
the three-dimensional data generation method includes a fifth step of shrinking or enlarging the fourth threaded portion data in a radial direction.

3. The three-dimensional data generation method of a threaded fastener for three-dimensional additive manufacturing according to claim 1, wherein
in the first step, the first threaded portion data is generated by enlarging the three-dimensional data of the threaded portion of the standard threaded fastener along the axial direction of the threaded portion of the standard threaded fastener by a factor of 2, and
in the third step, the third threaded portion data is generated by disposing the first threaded portion data and the second threaded portion data in such a manner that the first threaded portion data and the second threaded portion data are shifted from each other in the axial direction by 0.5 times a pitch of the first threaded portion data.

4. The three-dimensional data generation method of a threaded fastener for three-dimensional additive manufacturing according to claim 1, wherein
angles formed by an axis line of a threaded portion and two flanks related to one ridge in the first threaded portion data are each equal to or smaller than 50 degrees.

5. The three-dimensional data generation method of a threaded fastener for three-dimensional additive manufacturing according to claim 1, wherein
angles formed by an axis line of a threaded portion and two flanks related to one ridge in the first threaded portion data are each equal to or smaller than 45 degrees.

6. The three-dimensional data generation method of a threaded fastener for three-dimensional additive manufacturing according to claim 1, wherein
the standard threaded fastener has a screw thread in which the pitch interval is equal to or wider than twice a width of the ridge.

7. The three-dimensional data generation method of a threaded fastener for three-dimensional additive manufacturing according to claim 2, wherein
the standard threaded fastener has a screw thread in which the pitch interval is equal to or wider than twice a width of the ridge.

8. The three-dimensional data generation method of a threaded fastener for three-dimensional additive manufacturing according to claim 6, wherein
the three-dimensional data of the threaded portion is enlarged along the axial direction of the threaded portion by a factor of 1.0 in the first step when angles formed by an axis line of the threaded portion of the standard threaded fastener and two flanks related to one ridge are equal to or smaller than 45 degrees.

9. A manufacturing method of an additively manufactured object, wherein
an additively manufactured object is manufactured by a three-dimensional additive manufacturing apparatus on a basis of the fourth threaded portion data according to claim 1.
